**Europäisches Patentamt**

**European Patent Office**

**Office européen des brevets**

(19)

(11) Veröffentlichungsnummer: **0 225 327**
**B1**

(12) # EUROPÄISCHE PATENTSCHRIFT

(45) Veröffentlichungstag der Patentschrift:
04.01.89

(21) Anmeldenummer: **85904970.2**

(22) Anmeldetag: **02.10.85**

(86) Internationale Anmeldenummer:
**PCT/EP 85/00512**

(87) Internationale Veröffentlichungsnummer:
**WO 86/02112 (10.04.86 Gazette 86/08)**

(51) Int. Cl.⁴: **B 60 K 41/06**

(54) STEUEREINRICHTUNG ZUM SELBSTTÄTIGEN SCHALTEN VON STUFENWECHSELGETRIEBEN.

(30) Priorität: **04.10.84 PCT/EP84/00302**

(43) Veröffentlichungstag der Anmeldung:
**16.06.87 Patentblatt 87/25**

(45) Bekanntmachung des Hinweises auf die Patenterteilung:
**04.01.89 Patentblatt 89/1**

(84) Benannte Vertragsstaaten:
**DE FR GB IT SE**

(56) Entgegenhaltungen:
**EP-A-0 038 063**
**EP-A-0 107 761**
**EP-A-0 171 770**
**EP-A-0 174 787**
**DE-A-3 337 930**
**US-A-3 961 546**
**US-A-4 031 782**
**US-A-4 414 863**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **SCHREINER, Friedrich, Eichelen 16, D-7996 Meckenbeuren (DE)**

(74) Vertreter: **Raue, Reimund, Zahnradfabrik Friedrichshafen AG Löwentaler Strasse 100 Postfach 2520, D-7990 Friedrichshafen 1 (DE)**

## Beschreibung

Die Erfindung betrifft eine Steuereinrichtung zum selbsttätigen Schalten von Stufenwechselgetrieben nach dem Oberbegriff von Anspruch 1.

Bekannte selbsttätig schaltende Stufenwechselgetriebe für Kraftfahrzeuge werden in Abhängigkeit von Drehzahlen vorrangig der Abtriebsdrehzahl des Getriebes und von Lastzuständen, z. B. Stellung des Gaspedales, im Leerlauf, in Teillast oder Vollast (Kick-down) selbsttätig im Bereich der zur Verfügung stehenden Gänge geschaltet.

Es ist auch schon bekannt, daß durch den Fahrer über einen Wählschalter Gänge von dieser Schaltfolge ausgeschlossen werden können, z. B. bei Bergabfahrt. Solche Wählschalter haben neben den Stellungen für die normale Vorwärtsfahrt D, die Neutralstellung N und die Rückwärtsfahrt R z. B. noch die Stellungen I, II und III, wobei die automatischen Schaltungen des Getriebes dann analog dazu auf den ersten Gang oder eben auf die Gänge 2 und 3 begrenzt sind. Siehe Broschüre ZF-Automatgetriebe HP 500, Beschreibung, Bedienung und Wartung F1/12 ZFF 792 006.

Dieses System hat sich bewährt und gibt dem Fahrer ausreichende Eingriffsmöglichkeit bei selbsttätig schaltenden Stufenwechselgetrieben mit relativ wenig Gängen.

Bei Vielgang-Automatgetrieben, z. B. nach der DE-A-3 337 930, ist auch schon bekannt, nicht nur höhere, sondern auch tiefere Gänge durch eine entsprechende Verstellung von zwei Wählhebeln vom automatischen Schalten auszuschließen, z. B. bei Leerfahrten und Fahrten mit Teilbeladung.

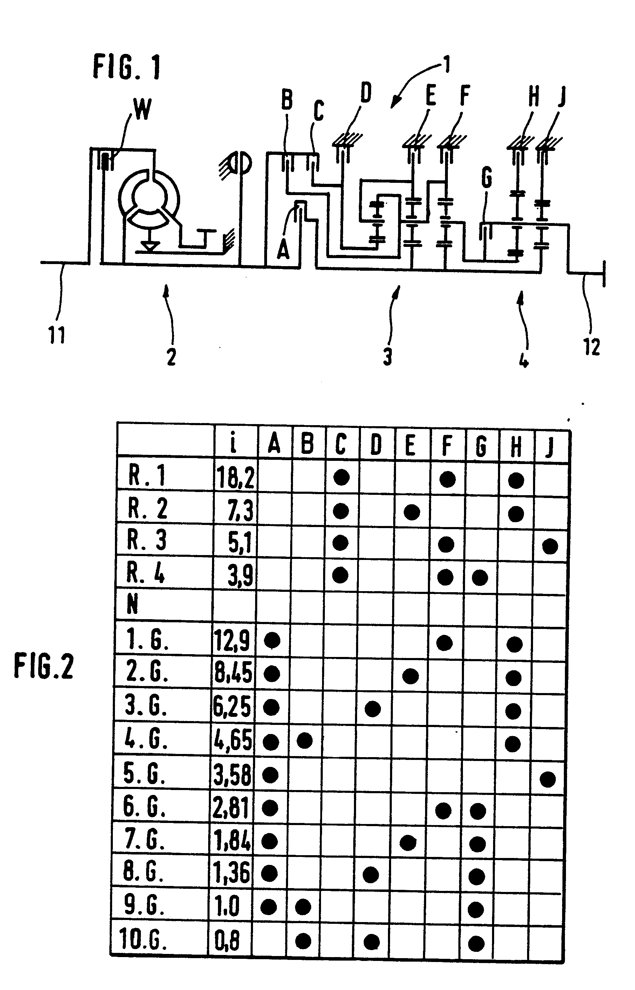

Aus der US-PS-4 414 863 ist weiter bekannt, ein Getriebe manuell wie auch automatisch zu schalten. Bei einer Verstellung auf Automatik können mit dem Handschalthebel die automatisch zu schaltenden Gänge nach oben - wie bei üblichen Automatgetrieben bekannt mit dem Wählhebel - begrenzt werden. Weiter stehen im automatischen Bereich drei Schaltbilder zur Verfügung, wobei zwei davon über einen Schalter 209, Fig. 2b, der in Abhängigkeit von der Beladung des Fahrzeuges betätigt wird, gewählt werden.

1. Geringe Beladung, 3. Gang zum Anfahren mit Wandler, 4. bis 6. Gang jeweils mit Wandler und jeweils direkt.
2. Hohe Beladung, Gänge 1 bis 6 generell mit Wandler.

Das dritte Schaltbild wird nur für das Zurückschalten benutzt und über den nicht betätigten Gashebel abgerufen, wobei vom Gang 6 bis Gang 4 ohne Wandler, also unter der Wirkung der Motorbremse zurückgeschaltet wird und erst bei der Rückschaltung in den 3. Gang die Wandlerüberbrückungskupplung wieder geöffnet wird.

Alle Hoch- und Rückschaltungen erfolgen von Gang zu Gang.

Aus der EP-0 174 787 (Stand der Technik nach Art. 54(3) EPÜ) ist es auch schon bekannt, bei hohen Belastungen im Antriebsstrang (Fahren im Gelände mit großen Steigungen), Rückschaltungen mit einem Gangsprung durchzuführen, um den hohen Drehzahlverlust durch eine bessere angepaßte Schaltung zu begegnen. Dazu wird über die Motordrehzahl und die Leistungsanforderung (Gaspedalstellung) ein neuer, tieferer Gang ermittelt, der nicht der nächsttiefere Gang sein muß. Wenn jedoch die zu erwartende errechnete Motordrehzahl zu hoch ist, erfolgt die Rückschaltung nur in den Gang, der zwischen dem errechneten und dem bisher eingelegten Gang liegt.

In dieser Schalteinrichtung wird also über Berechnungen, die an einem über die Motordrehzahl und die Lastanforderung ermittelten Rückschaltpunkt eingeleitet wird, ein neuer tieferer Gang ermittelt und, wenn zuverlässig, auch mit einem Gangsprung geschaltet. Jedem Gang im Getriebe, ist dabei ein Rückschaltpunkt zugeordnet und eventuelle Gangsprünge bei einer Rückschaltung werden über Berechnungen ermittelt.

In der Schalteinrichtung nach der nichtvorveröffentlichten EP-0 171 770 (Stand der Technik nach Art. 54(3) EPÜ) können zwei verschiedene Schaltmodi ausgewählt werden, wobei im zweiten Schaltmodus mindestens eine Gangstufe (z. B. der zweite oder der vierte Gang) übersprungen werden kann. Die Auswahl der Schaltmodi, in Verbindung mit der Beschleunigungsänderung, ist dieser Schrift nicht zu entnehmen.

Weiter ist noch bekannt, durch einen Vorwählschalter auch bei einem selbsttätig schaltenden Stufenwechselgetriebe die Schaltpunkte zu verändern, so daß z. B. eine ökonomische oder leistungsbezogene Fahrweise möglich ist.

Alle diese Einrichtungen befriedigen insbesondere bei einer Steuereinrichtung zum selbsttätigen Schalten von vielgängigne Stufenwechselgetrieben, mit denen eine hohe Anpassung des Antriebsstranges an den Motor und besonders an das verbrauchsgünstige Kennfeld des Motors erzielt werden soll, nicht. Bei den bisher üblichen Automatgetrieben mit relativ wenigen Gängen ist die Verweildauer ja Gang entsprechend der relativ geringen Übersetzung und groben Stufung groß und deshalb die Schalthäufigkeit unproblematisch. Anders ist es jedoch bei vielgängigen Automatgetrieben mit feinen Stufensprüngen, wie sie zum treibstoffsparenden Betrieb notwendig sind.

Es ist deshalb Aufgabe der Erfindung, eine Steuereinrichtung nach dem Oberbegriff von Anspruch 1 weiterzuentwickeln, die insbesondere die geringen Anspände der Schaltpunkte bei vielgängigen Automatgetrieben berücksichtigt und bei der es infolge der relativ vielen Gänge trotzdem nicht zu einer zu hohen Schalthäufigkeit führt.

Diese Aufgabe wird mit den kennzeichnenden Merkmalen vom jeweiligen Anspruch 1 erfüllt, wobei die Anspruchsreihe A (Ansprüche 1 - 12) für die Länder SE und IT und die Anspruchsreihe B (Ansprüche 1 - 11) für DE,FR und GB gültig sind.

Während bei bisher bekannten selbsttätig schaltenden Stufenwechselgetrieben alle Gänge geschlatet werden, wenn man von der Beschränkung insbesondere im Schubbetrieb durch die Stellung 1, 2, 3 des Wählschalters absieht, wird je nach Fahrzustand durch die Auswahl von Schaltmodi nur eine Auswahl der möglichen Gänge für Schaltungen herangezogen, so daß es sich beim Aufwärts- bzw. beim Abwärtsschalten in der Gangfolge Schalt- oder Gangsprünge ergeben. Damit ist es möglich, im Vollastbetrieb und bei hoher Leistungsanforderung in bisher bekannter Weise von Gang zu Gang zu schalten, was nur bei diesem Fahrzustand sinnvoll ist, während z. B. bei scharfen Bremsen oder bei Leerfahrt nicht alle Gänge geschaltet werden, sondern ein Modi, der dem Fahrzustand entspricht, ausgewählt wird. Die Gangauswahl in Abhängigkeit des entsprechenden Nutzfahrzeuges und für verschiedene Fahrzustände und deren Festlegung in Schaltmodi führt zu einer erheblichen Einschränkung der Schalthäufigkeit, ohne daß die optimale Anpassung an den jeweiligen Fahrzustand und an das verbrauchsgünstige Kennfeld des Motors beeinträchtigt wird.

In besonders einfacher Weise kann der Fahrzustand über die Beschleunigungsänderung ermittelt werden, weil sich in diesem Wert alle Einflußfaktoren, die auf einen Antriebsstrang eines Fahrzeuges wirken können, darstellen. Der elektronischen Einheit muß nur, wie bisher auch üblich, die Drehzahl aus dem Antriebsstrang übermittelt werden.

Die Ermittlung der Beschleunigungsänderung aus der Drehzahl des Getriebeabtriebsstranges scheint deshalb besonders vorteilhaft, weil der jeweils geschaltete Gang nicht berücksichtigt werden muß. Auch die Beschleunigungsänderung kann von der elektronischen Einheit relativ einfach ermittelt werden, indem die Beschleunigung in festgelegten Takten ermittelt und für eine vorgesehene Zeitdauer gespeichert wird. Dieser Speicherwert ist dann nur mit den jeweils einzelnen Beschleunigungswerten zu vergleichen. Der Steuerung stehen also mehrere Schaltfolgen - Schaltmodi - zur Verfügung, deren Auswahl nach der momentanen Betriebssituation - Fahrzustand - erfolgt. Dabei hat die Ermittlung der Schaltfolge, also des jeweiligen Schaltmodus, Vorrang vor dem drehzahlabhängigen Schaltpunkt des gerade geschalteten Schaltmodus.

Besonders in Grenzbereichen zwischen zwei nur geringfügig voneinander abweichenden Fahrzuständen kann für die Auswahl des Schaltmodus die Lastabhängigkeit von Bedeutung sein, so daß diese neben der Beschleunigungsänderung in die Auswahlkriterien für den jeweiligen Schaltmodus mit einbezogen wird.

Bei plötzlich auftretenden, sehr großen Beschleunigungsänderungen, z. B. bei einer Vollbremsung, ist es möglich, daß selbst der die meisten Gänge überspringende Schaltmodus noch zu keiner optimalen Anpassung führt. Deshalb kann ein Zusatzmodus, der gar keine feste Gangfolge beinhaltet, sondern ganz kurzzeitig in Neutral und dann in den Gang schaltet, der der momentan anliegenden Drehzahl entspricht, vorteilhaft sein.

Für das Anfahren kann es auch sinnvoll sein, einen entsprechenden Schaltmodus vorzuwählen, der das Anfahren im 3. oder z. B. auch 4. Gang vorsieht, weil ja dieser Modus aus dem Stand heraus über die Beschleunigungsänderung nicht ermittelt werden kann.

Den Wählschalterstellungen, insbesondere für die Vorwärtsfahrt, können in Abhängigkeit von der Vielgängigkeit des Stufenwechselgetriebes jeweils mehrere Gänge zugeordnet werden, so daß z. B. der Wählschalterstellung I die Begrenzung auf die Gänge 1 und 2 zugeordnet wird. Dem Wählschalter im Rückwärtsfahrbereich können auch noch Stellungen zugeordnet werden, die weitere Rückwärtsgänge vorsehen und schließlich können mit der Wählschalterstellung bestimmte Schaltmodi ganz verhindert werden.

Aus der DE-PS-2 708 621 ist bekannt, die Beschleunigung zur Ermittlung von Schaltpunkten neben dem Drehmoment im eingelegten Gang und der Abtriebsdrehzahl mit heranzuziehen. In dieser Schrift werden aber die Schaltpunkte für alle Gänge des selbsttätig schaltenden Stufenwechselgetriebes durch Vergleich von gespeichertem Soll- mit erfaßtem Ist-Wert ermittelt. Eine Auswahl von Gängen zur Bildung verschiedener Schaltfolgen ist dieser Schrift nicht zu entnehmen.

Aus der EP-A-0 038 083 ist bekannt, eine Vielzahl von Schaltarten bzw. Getriebeschaltbildern in einem Speicher darzustellen und in Abhängigkeit von der Drosselöffnung und der Motordrehzahl ein geeignetes Getriebeschaltbild auszuwählen. Die Schaltarten und Getriebeschaltbilder beziehen sich aber ausschließlich auf die Schaltpunkte für die einzelnen Gänge, wie es in der Beschreibung und in der Fig. 7a bis 7c und 11a bis 11d dargestellt ist. Getriebeschaltbilder - Schaltmodi - im Sinne der Anmeldung sind dieser Schrift nicht zu entnehmen.

Weitere Einzelheiten der Erfindung werden anhand von einem Ausführungsbeispiel und anhand von Zeichnungen erläutert, wobei die Einzelheiten der Zeichnung Gegenstand der Erfindung sind.

Es zeigen:

Fig. 1    ein Stufenwechselgetriebe mit 10 möglichen Vorwärtsgängen in einer Anordnung als hydrodynamisches

Fig. 2     mechanisches Stufenwechselgetriebe in Umlaufräderanordnung.

Fig. 2     eine Darstellung der in jedem Gang jeweils eingeschalteten Kupplungen und Bremsen und die in jedem Gang erreichte Gesamtübersetzung für ein Stufenwechselgetriebe nach Fig. 1.

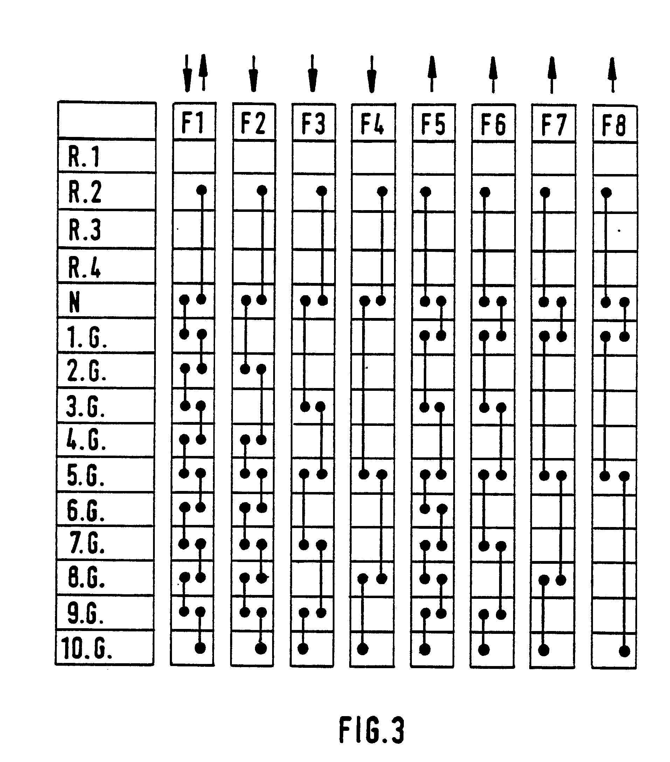

Fig. 3     mögliche Schaltmodi für ein Getriebe nach Fig. 1.

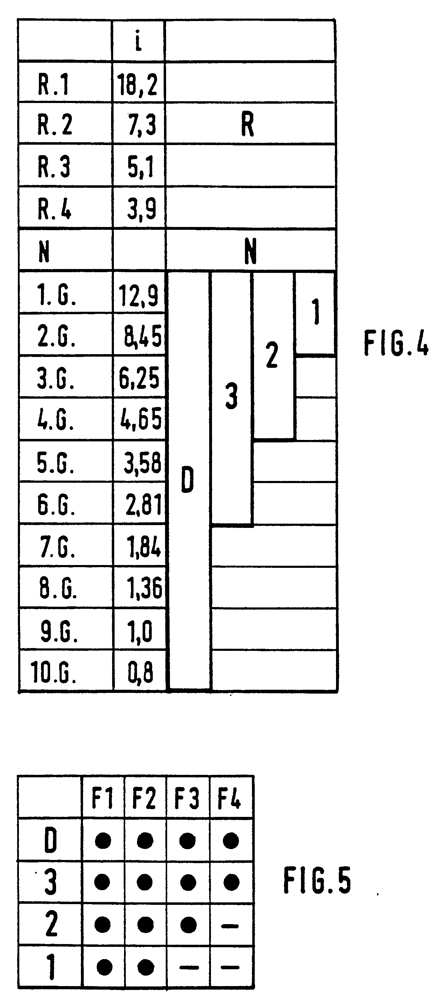

Fig. 4     eine Darstellung der Gänge, auf die die automatische Schaltung entsprechend der Wählschalterstellungen beschränkt ist.

Fig. 5     eine mögliche Auswahl der Schaltmodi in Abhängigkeit der Wählschalterstellung für die Schaltbegrenzung.

In dem Beispiel nach Fig. 1 ist das selbsttätig schaltende Stufenwechselgetriebe 1 in Form eines hydrodynamisch-mechanischen Umlaufrädergetriebes ausgeführt. Es besteht aus einem hydrodynamischen Drehmomentwandler 2, einem Grundgetriebe 3 und einem Gruppengetriebe 4. Infolge der Vielgängigkeit dieses Stufenwechselgetriebes ist es auch denkbar, den hydrodynamischen Drehmomentwandler durch eine hydrodynamische Kupplung zu ersetzen. Während diese Ausführung im Prinzip ohne Zugkraftunterbrechung geschaltet wird, erlaubt die Vielgängigkeit eines selbsttätig schaltenden Stufenwechselgetriebes auch die Ausführung in Vorgelegebauweise mit Zugkraftunterbrechung, weil ja die Gangabstufungen relativ klein sind und zu geringen Drehzahlunterschieden der Schaltpunkte führen.

Aus Fig. 2 sind neben der Übersetzung i in den einzelnen Gängen noch die in den einzelnen Gängen jeweils geschalteten Kupplungen und Bremsen des Grund- 3 und Gruppengetriebes 4 zu erkennen.

In Fig. 3 sind mögliche Schaltmodi F1 bis F8 dargestellt, wobei der Schaltmodus FI eine Hoch- und Rückschaltung beinhaltet, wie sie bisher nach dem Stand der Technik bekannt ist und wo im Prinzip jeweils von Gang zu Gang wie bekannt drehzahl- und lastabhängig geschaltet wird. Die Schaltmodi F2 bis F4 beinhalten nur Hochschaltungen und bei dem Schaltmodul F2 sind die Gänge 1 und 3 von einer selbsttätigen Schaltung ausgeschlossen. Bei F3 sind es die Gänge 1, 2, 4, 6, 8 und bei F4 die Gänge 1 bis 4, 6, 7 und 9, die übersprungen werden.

Bei dem dargestellten Schaltmodi für Rückschaltungen F5 bis F8 erfolgt bei F5 eine mögliche Rückschaltung zwischen den Gängen 10 und 5 von Gang zu Gang, während bei einer weiteren Rückschaltung der 4. und 2. Gang übersprungen wird.

Die jeweils selbsttätig geschalteten bzw. die bei einer Rückschaltung durch hohe Gänge der Schaltmodi F6 bis F8 sind aus der Fig. 3 leicht erkennbar und bedürfen keiner weiteren Erläuterung.

Fig. 4 zeigt schematisch eine mögliche Anordnung der Stellung des Wählschalters, wie sie sich bei einem Vielgang-Getriebe darstellen könnte. Während in der Stellung D im Prinzip alle Gänge selbsttätig geschaltet werden können, werden in der Stellung 1 die Gänge 3 bis 10, in der Stellung 2 die Gänge 5 bis 10 und in der Stellung 3 die Gänge 7 bis 10 von einer selbsttätigen Schaltung ausgechlossen, so daß z. B. eine Begrenzung von Hochschaltungen bei Gefällefahrt in der gewünschten und im Prinzip bekannten Weise erfolgen.

Während die Schaltbegrenzung bei den Schaltmodi - einzelne Gänge werden nicht gechaltet und übersprungen - in Abhängigkeit von Fahrzustand selbsttätig erfolgt und nur in Ausnahmefällen, z. B. beim Anfahren von Hand, vorgewählt werden, ist der Wählschalter zum Begrenzen der selbsttätig zu schaltenden Gänqe noch immer von Hand zu betätigen.

Als Wählschalter für die Begrenzung der Gänge, die selbsttätig schaltbar sind, kann auch ein in der DE-A-3 337 930 ausführlich beschriebener Wählschalter benutzt werden, weil dieser sowohl untere wie auch obere Gänge von der selbsttätigen Schaltung ausschließen kann.

Der Wählschalter beeinflußt auch die Auswahl der Schaltmodi, so daß, wie Fig. 5 zeigt, bei der Wählhebelstellung 1 die beiden Schaltmodi F3 und F4 und in der Wählhebelstellung 2 der Schaltmodus F4 ausgeschlossen sind.

Die Steuereinrichtung zum selbsttätigen Schalten von Stufenwechselgetrieben soll anhand von ausgewählten Fahrzuständen beispielhaft erklärt werden:

Fahrt am Berg mit hoher Last
Wählhebelstellung D oder entsprechende Doppelhebelstellung. Bei hoher Last und großer Leistungsanforderung ist der Schaltmodus F1 sinnvoll, der bei relativ kleinen Beschleunigungsänderungen von der elektronischen Einheit vorgewählt wird, so daß alle vom Getriebe her zur Verfügung stehenden Gänge je nach Steilheit des Fahrprofils auch geschaltet werden können.

Übergang am steilen Berg mit hoher Last
Infolge der relativ großen negativen Beschleunigungsänderung (Verzögerung) erfolgt in Abhängigkeit davon je nach Steilheit die Auswahl von Modus F5 bis F8. Bei sehr starker Steigung, z. B. bei einem automatisch ausgewählten Modus F8, wird sofort vom 10. in den 5. und weiter in den 1. Gahg zurückgeschaltet. Bei nicht so großer Verzögerung könnte auch der Modus F6 gewählt werden, so daß nur die Gänge 8, 6, 4, 2 übersprungen werden.

Fahrt in der Ebene mit hoher Last
Hier würde evtl. F2 oder F3 gewählt, wobei der Schaltmodus F2 einem 8-Gang und F3 einem 5-Gang-Getriebe vergleichbar wäre.

Fahrt mit geringer Last

Infolge der möglichen größeren Beschleunigungsänderungen beim Hochschalten werden Schaltmodi mit wenigen Gängen, z. B. F3 und F4, gewählt. Bei nötigen Rückwärtsschaltungen am Berg werden infolge der geringen Verzögerungen z. B. der Schaltmodus F5 oder F6 vorgewählt.

Anfahren

Der Wählschalter wird z. B. durch die Schaltmodi F1 bis F4 ergänzt, so daß sowohl im 1., 2., 3. und auch 5. Gang angefahren werden kann oder es wird ein Doppelhebel-Wählschalter benutzt, dessen Stellungen jeden Gang als Anfahrgang festlegen können.

Weiter ist es auch möglich, grundsätzlich den Modi F3 als Anfahrmodi, also den 3. Gang, als Anfahrgang festzulegen. Ein gewünschtes Anfahren im 1. oder 2. Gang müßte dann mit dem Wählschalter festgelegt werden.

Für die Auswahl der Schaltmodi, die in der elektronischen Einheit gespeichert werden und dem jeweils Beschleunigungsänderungen zugeordnet sind, können auch noch die Lastabhängigkeit zugeordnet werden, so daß die Schaltpunkte jedes Schaltmodus für den Gangwechsel nur noch drehzahlabhängig festgelegt sind.

Während sich aus der Beschleunigungsänderung, die aus dem Antriebsstrang ermittelt wird, der Fahrzustand ableitet der sich gerade für das Fahrzeug ergibt, selbstverständlich auch unter Berücksichtigung des Fahrwunsches - Wirkung des Antriebsmotors hergeleitet aus der Gashebelstellung - wird mit der Einbeziehung des Lastzustandes bzw. der Lastabhängigkeit in die Auswahl der Schaltmodi, der Wille des Fahrers noch stärker berücksichtigt. Als Lastzustand könnten die Gashebelstellungen z. B. Teillast-Vollast - Kickdown benutzt werden.

**Bezugszeichen**

| | |
|---|---|
| F | Schaltmodi |
| F1 | Schaltmodus |
| F2 | Schaltmodus |
| F3 | Schaltmodus |
| F4 | Schaltmodus |
| F5 | Schaltmodus |
| F6 | Schaltmodus |
| F7 | Schaltmodus |
| F8 | Schaltmodus |
| 1 | Stufenwechselgetriebe |
| 2 | Hydrodynamischer Drehmomentwandler |
| 3 | Grundgetriebe |
| 4 | Gruppengetriebe |
| 11 | Getriebeeingangswelle |
| 12 | Getriebeabtriebsstrang |
| A | Kupplungen |
| B | Kupplungen |
| C | Kupplungen |
| G | Kupplungen |
| W | Kupplungen |
| D | Bremsen |
| E | Bremsen |
| F | Bremsen |
| H | Bremsen |
| J | Bremsen |
| I | Übersetzungen |

**Patentansprüche** für die Vertragsstaaten SE,IT.

1. Steuereinrichtung zum selbsttätigen Schalten von Stufenwechselgetrieben mit einer elektronischen Steuereinheit, in der mehrere Schaltbilder gespeichert sind, die über Vorwählschalter, Schalter, die in Abhängigkeit von der Beladung des Fahrzeuges geschaltet oder über die Leergasstellung für die automatische Schaltung ausgewählt werden, wobei vom Gesamtschaltbild höhere wie auch tiefere Gänge ausgeschlossen sind und/oder die Schaltbilder sich durch für die Gangumschaltung unterschiedliche Hochund Rückschaltpunkte unterscheiden, die Ermittlung der Schaltpunkte drehzahl- und lastabhängig erfolgt und ein Wählschalter für die Park- und/oder Neutralstellung sowie zumindest für die Vorwärts- und Rückwärtsfahrt angeordnet ist, dadurch gekennzeichnet, daß die gespeicherten Schaltbilder aus mehreren den möglichen Fahrzuständen zugeordneten Schaltmodi (F1 bis F8) bestehen, die jeweils eine Auswahl von möglichen Gängen beinhalten und in Abhängigkeit vom tatsächlich ermittelten Fahrzustand ein Schaltmodus (F1 bis F8) ausgewählt und nach dessen Gangfolge geschaltet wird, so daß infolge von Gangsprüngen beim Aufwärts- bzw. beim Abwärtsschalten eines Vielganggetriebes sich . eine geringere Anzahl von Schaltpunkten ergibt, durch die die Anzahl der automatisch zu schaltenden Gänge verringert wird.

2. Steuereinrichtung nach Anspruch 1, dadurch gekennzeichnet, daß der Fahrzustand über die fortlaufend erfaßte Beschleunigungsänderung ermittelt wird.

3. Steuereinrichtung nach Anspruch 2, dadurch gekennzeichnet, daß die Beschleunigung in festgelegten Zeiteinheiten ermittelt und für eine vorgegebene Zeitdauer zum Vergleich mit den einzelnen in den Zeiteinheiten ermittelten Beschleunigungswerten gespeichert wird.

4. Steuereinrichtung nach Anspruch 3, dadurch gekennzeichnet, daß die Ermittlung der Beschleunigung aus der Drehzahl im Getriebeabtriebsstrang (12) erfolgt.

5. Steuereinrichtung nach Anspruch 4, dadurch gekennzeichnet, daß die Auswahl des Schaltmodus (F1 bis F8) in Abhängigkeit der Beschleunigungsänderung zuerst und die Schaltung dann drehzahl- und lastabhängig erfolgt.

6. Steuereinrichtung nach Anspruch 4, dadurch gekennzeichnet, daß die Auswahl des Schaltmodus (F1 bis F8) aus der Beschleunigungsänderung und der Lastabhängigkeit zuerst und die Schaltung drehzahlabhängig danach erfolgt.

7. Steuereinrichtung nach Anspruch 1, dadurch gekennzeichnet, daß die Schaltmodi (F1 bis F8) sowohl für die Aufwärts- wie auch für die Rückschaltungen oder auch nur für eine dieser Schaltfolgen gültig sind.

8. Steuereinrichtung nach Anspruch 1, dadurch gekennzeichnet, daß bestimmte Schaltmodi (F1 bis F8) auch von Hand vorgewählt werden können.

9. Steuereinrichtung nach Anspruch 1, dadurch gekennzeichnet, daß ein Schaltmodus als Zusatzroutine gespeichert ist, der aus jedem Gang in die Neutralstellung und sofort wieder drehzahlabhängig in einen Gang schaltet, wenn die Beschleunigungsänderung besonders groß ist und keinem der festgelegten Schaltmodi zugeordnet werden kann.

10. Steuereinrichtung nach Anspruch 1, dadurch geennzeichnet, daß die einzelnen, im Vorwärtsfahrbeeich zugeordneten Stellungen des Wählschalters auch mehreren Gängen des Vorwärtsbereiches zugeordnet sind.

11. Steuereinrichtung nach Anspruch 10, dadurch gekennzeichnet, daß der Wählschalter auch noch eine Vorwahl für weitere Rückwärtsgänge hat.

12. Steuereinrichtung nach Anspruch 1, dadurch gekennzeichnet, daß die Wählschalterstellung auch die Auswahl des Schaltmodus beeinflußt.

**Patentansprüche** für die Vertragsstaaten DE, FR, GB.

1. Steuereinrichtung zum selbsttätigen Schalten von Stufenwechselgetrieben mit einer elektronischen Steuereinheit, in der mehrere Schaltbilder gespeichert sind, die über Vorwählschalter, Schalter, die in Abhängigkeit von der Beladung des Fahrzeuges geschaltet oder über die Leergasstellung für die automatische Schaltung ausgewählt werden, wobei vom Gesamtschaltbild höhere wie auch tiefere Gänge ausgeschlossen sind und/oder die Schaltbilder sich durch für die Gangumschaltung unterschiedliche Hoch- und Rückschaltpunkte unterscheiden, die Ermittlung der Schaltpunkte drehzahl- und lastabhängig erfolgt und ein Wählschalter für die Park- und/oder Neutralstellung sowie zumindest für die Vorwärts- und Rückwärtsfahrt angeordnet ist, dadurch gekennzeichnet, daß die gespeicherten Schaltbilder aus mehreren den möglichen Fahrzuständen zugeordneten Schaltmodi (F1 bis F8) bestehen, die jeweils eine Auswahl von möglichen Gängen beinhalten und in Abhängigkeit vom, über die fortlaufend erfaßte Beschleunigungsänderung, tatsächlich ermittelten Fahrzustand ein Schaltmodus (F1 bis F8) ausgewählt und nach dessen Gangfolge geschaltet wird, so daß infolge von Gangsprüngen beim Aufwärts- bzw. beim Abwärtsschalten eines Vielganggetriebes sich eine geringere Anzahl von Schaltpunkten ergibt, durch die die Anzahl der automatisch zu schaltenden Gänge verringert wird.

2. Steuereinrichtung nach Anspruch 1, dadurch gekennzeichnet, daß die Beschleunigung in festgelegten Zeiteinheiten ermittelt und für eine vorgegebene Zeitdauer zum Vergleich mit den einzelnen in den Zeiteinheiten ermittelten Beschleunigungswerten gespeichert wird.

3. Steuereinrichtung nach Anspruch 2, dadurch gekennzeichnet, daß die Ermittlung der Beschleunigung aus der Drehzahl im Getriebeabtriebsstrang (12) erfolgt.

4 Steuereinrichtung nach Anspruch 3, dadurch gekennzeichnet, daß die Auswahl des Schaltmodus (F1 bis F8) in Abhängigkeit der Beschleunigungsänderung zuerst und die Schaltung dann drehzahl- und lastabhängig erfolgt.

5. Steuereinrichtung nach Anspruch 3, dadurch gekennzeichnet, daß die Auswahl des Schaltmodus (F1 bis F8) aus der Beschleunigungsänderung und der Lastabhängigkeit zuerst und die Schaltung drehzahlabhängig danach erfolgt.

6. Steuereinrichtung nach Anspruch 1, dadurch gekennzeichnet, daß die Schaltmodi (F1 bis F8) sowohl für die Aufwärts- wie auch für die Rückschaltungen oder auch nur für eine dieser Schaltfolgen gültig sind.

7. Steuereinrichtung nach Anspruch 1, dadurch gekennzeichnet, daß bestimmte Schaltmodi (F1 bis F8) auch von Hand vorgewählt werden können.

8. Steuereinrichtung nach Anspruch 1, dadurch gekennzeichnet, daß ein Schaltmodus als Zusatzroutine gespeichert ist, der aus jedem Gang in die Neutralstellung und sofort wieder drehzahlabhängig in einen neuen Gang schaltet, wenn die Beschleunigungsänderung besonders groß ist und keinem der festgelegten Schaltmodi zugeordnet werden kann.

9. Steuereinrichtung nach Anspruch 1, dadurch gekennzeichnet, daß die einzelnen, im Vorwärtsfahrbereich zugeordneten Stellungen des Wählschalters auch mehreren Gängen des Vorwärtsbereiches zugeordnet sind.

10. Steuereinrichtung nach Anspruch 9, dadurch gekennzeichnet, daß der Wählschalter auch noch eine Vorwahl für weitere Rückwärtsgänge hat.

11. Steuereinrichtung nach Anspruch 1, dadurch gekennzeichnet, daß die Wählschalterstellung auch die Auswahl des Schaltmodus beeinflußt.

**Claims** for the Contracting States: DE, FR, GB.

1. Control system for independent shifting of gear change boxes with an electronic control unit storing several shift patterns switched as a function of the vehicle loading or selected via the no-gas position for automatic shifting, whereby higher as well as lower gears are excluded from the overall shift pattern and/or the shift patterns differ as a result of different shift-up and shiftdown points, the shift points are determined in accordance with speed and load, and a selector switch for the parking and/or neutral position is provided at least for forward and reverse travel, characterised in that the stored shift patterns consist of several shift modes (F1 to F8) assigned to the possible driving states, each of these modes comprising a section of possible gears, one shift mode (F1 to F8) being selected in accordance with the driving state actually determined and the continuously measured acceleration change, and shifted in the sequence of its gears, so that owing to gear leaps when shifting a gearbox with several gears up or down a smaller number of shift points results, thus causing the number of gears which has to be shifted automatically to be reduced

2. Control system according to claim 1, characterised in that the acceleration is determined in fixed units of time and stored, during a given time, for comparison with the various acceleration values determined in the time units.

3. Control system according to claim 1, characterised in that the acceleration is determined in accordance with the speed of the gear output train (12).

4. Control system according to claim 3, characterised in that first the shift mode (F1 to F8) is selected as a function of the change in acceleration whereupon shifting takes place as a funktion of speed and load.

5. Control system according to claim 3, characterised in that the selection of the shift mode (F1 to F8) is first effected as a function of change in acceleration and load dependence whereupon shifting takes place in accordance with the speed.

6. Control system according to claim 1, characterised in that the shift modes (F1 to F8) apply both to the up- and down- shifts or also only for one of these shift sequences.

7. Control system according to claim 1, characterised in that certain shift modes (F1 to F8) can also be preselected by hand.

8. Control system according to claim 1, characterised in that a shift mode is stored as an auxiliary routine, said mode shifting from every gear to the neutral position and again immediately and as a function of speed to a new gear, if the change in acceleration is particularly high and cannot be assigned to any of the established shift modes.

9. Control system according to claim 1, characterised in that the various positions of the selector switch allocated within the forward driving range are also assigned to several gears of the forward range.

10. Control system according to claim 9, characterised in that the selector switch also has a preselection facility for further reverse gears.

11. Control system according to claim 1, characterised in that the selector switch position also affects the selection of the shift mode.

**Claims** for the contracting states: IT, SE.

1. Control system for independent shifting of gear change boxes with an electronic control unit storing several shift patterns switched as a function of the vehicle loading or selected via the no-gas position for automatic shifting, whereby higher as well as lower gears are excluded from the overall shift pattern and/or the shift patterns differ as a result of different shift-up and shiftdown points, the shift points are determined in accordance with speed and load, and a selector switch for the parking and/or neutral position is provided at least for forward and reverse travel, characterised in that the stored shift patterns consist of several shift modes (F1 to F8) assigned to the possible driving states, each of these modes comprising a section of possible gears, one shift mode (F1 to F8) being selected in accordance with the driving state actually determined and shifted in the sequence of its gears, so that owing to gear leaps when shifting a gearbox with several gears up or down a smaller number of shift points results, thus causing the number of gears which has to be shifted automatically to be reduced.

2. Control system according to claim 1, characterised in that the driving state is determined in accordance with the continuously measured acceleration change.

3. Control system according to claim 2, characterised in that the acceleration is determined in fixed units of time and stored, during a given time, for comparison with the various acceleration values determined in the units.

4. Control system according to claim 3, chararacterised in that the acceleration is determined in accordance with the speed of the gear output train (12).

5. Control system according to claim 4, characterised in that first the shift mode (F1 to F8) is selected as a function of the change in acceleration whereupon shifting takes place as a function of speed and load.

6. Control system according to claim 4, characterised in that the selection of the shift more (F1 to F8) is first effected as a function of change in acceleration and load dependence whereupon shifting takes place in accordance with the speed.

7. Control system according to claim 1, characterised in that the shift modes (F1 to F8) apply both to the up- and downshifts or also only for one of these shift sequences.

8. Control system according to claim 1, characterised in that certain shift modes (F1 to F8) can also be preselected by hand.

9. Control system according to claim 1, characterised in that a shift mode is stored as an auxiliary routine, said mode shifting from every gear to the neutral position and again immediately and as a function of speed to a gear, if the change in acceleration is particularly high and cannot be assigned to any of the established shift modes.

10. Control system according to claim 1, characterised in that the various positions of the selector switch allocated within the forward driving range are also assigned to several gears of the forward range.

11. Control system according to claim 10, characterised in that the selector switch also has a preselection facility for futher reverse gears.

12. Control system according to claim 1, caracterised in that the selector switch position also affects the selection of the shift mode.

**Revendications** pour les Etats Contractants: DE, FR, GB.

1. Dispositif de commande pour commutation automatique de boîtes de vitesses à changements échelonnés, comportant une unité électronique de commande dans laquelle sont stockés plusieurs schémas de commutation agissant sur des présélecteurs qui sont commandés en fonction de la charge du véhicule ou sont sélectionnés par la position relâchée de l'accélérateur pour la commutation automatique, dans lequel des vitesses supérieures et également des vitesses inférieures sont exclues du schéma général de commutation et/ou les schémas de commutation se différencient par différents points de commutation pour la montée des vitesses et la rétrogradation, la détermination des points de commutation se fait en fonction du régime et de la charge, et il y a un sélecteur pour la position de stationnement et la position neutre, ainsi qu'au moins pour la marche avant et la marche arrière, caractérisé en ce que les schémas de commutation stockés comprennent plusieurs modes de commutation (F1 à F8) qui correspondent aux états de marche possibles et qui comportent chacun un assortiment de vitesses possibles, un mode de commutation (F1 à F8) étant sélectionné en fonction de l'état de marche effectif calculé, sur la base de la variation d'accélération détectée en continu, et déterminant sa propre séquence de vitesses, de manière à sauter des vitesses en montant les vitesses et en rétrogradant dans une boîte à vitesses multiples et à produire un plus petit nombre de points de commutation, réduisant le nombre des vitesses à enclencher automatiquement.

2. Dispositif selon la revendication 1, caractérisé en ce que l'accélération est calculée sur des intervalles de temps fixes et est mémorisée pour une durée prédéterminée pour être comparée aux diverses valeurs d'accélération calculées sur lesdits intervalles.

3. Dispositif selon la revendication 2, caractérisé en ce que le calcul de l'accélération se fait à partir du régime de rotation à la sortie (12) de la boîte.

4. Dispositif selon la revendication 3, caractérisé en ce que d'abord la sélection du mode de commutation (F1 à F8) a lieu en fonction de la variation d'accélération, puis la commutation a lieu en fonction du régime et de la charge.

5. Dispositif selon la revendication 3, caractérisé en ce que d'abord la sélection du mode de commutation (F1 à F8) a lieu en fonction de la variation d'accélération et de la charge, puis la commutation a lieu en fonction du régime.

6. Dispositif selon la revendication 1, caractérisé en ce que les modes de commutation (F1 à F8) sont valables aussi bien pour monter les vitesses que pour rétrograder ou ne sont valables que pour l'une de ces séquences.

7. Dispositif selon la revendication 1, caractérisé en ce que certains modes de commutation (F1 à F8) peuvent aussi être présélectionnés à la main.

8. Dispositif selon la revendication 1, caractérisé en ce que un mode de commutation est stocké sous la forme d'un sous-programme auxiliaire qui commande un passage de chaque vitesse à la position neutre, puis immédiatement un passage à une vitesse en fonction du régime, si la variation d'accélération est particulièrement grande et ne peut correspondre à aucun des modes de commutation définis.

9. Dispositif selon la revendication 1, caractérisé en ce que les diverses positions de marche avant du sélecteur sont associées à plusieurs vitesses de marche avant.

10. Dispositif selon la revendication 9, caractérisé en ce que le sélecteur comporte en outre une présélection pour des vitesses en marche arrière.

11. Dispositif selon la revendication 1, caractérisé en ce que la position du sélecteur influence aussi la sélection du mode de commutation.

**Revendications** pour les Etats Contractants: IT, SE.

1. Dispositif de commande pour commutation automatique de boîtes de vitesses à changements échelonnés, comportant une unité électronique de commande dans laquelle sont stockés plusieurs schémas de commutation agissant sur des présélecteurs qui sont commandés en fonction de la charge du véhicule ou sont sélectionnés par la position relâchée de l'accélérateur pour la commutation automatique, dans lequel des vitesses supérieures et également des vitesses inférieures sont exclues du schéma général de commutation et/ou les schémas de commutation se différencient par différents points de commutation pour la montée des vitesses et la rétrogradation, la détermination des points de commutation se fait en fonction du régime et de la charge, et il y a un sélecteur pour la position de stationnement et la position neutre, ainsi qu'au moins pour la marche avant et la marche arrière, caractérisé en ce que les schémas de commutation stockés comprennent plusieurs modes de commutation (F1 à F8) qui correspondent aux états de marche possibles et qui comportent chacun un assortiment de vitesses possibles, un mode de commutation (F1 à F8) étant sélectionné en fonction de l'état de marche effectif calculé, et déterminant sa propre séquence de vitesses, de manière à sauter des vitesses en montant les vitesses et en rétrogradant dans une boîte à vitesses multiples et à produire un plus petit nombre de points de commutation, réduisant le nombre des vitesses a enclencher automatiquement.

2. Dispositif selon la revendication 1, caracterise en ce que l'état de marche est calculé sur la base de la variation d'accélération, détectée en continu.

3. Dispositif selon la revendication 2, caractérisé en ce que l'accélération est calculée sur des intervalles de temps fixes et est mémorisée pour une durée prédéterminée pour être comparée aux diverses valeurs d'accélération calculées sur lesdits intervalles.

4. Dispositif selon la revendication 3, caractérisé en ce que le calcul de l'accélération se fait à partir du régime de rotation à la sortie (12) de la boîte.

5. Dispositif selon la revendication 4, caractérisé en ce que d'abord la sélection du mode de commutation (F1 à F8) a lieu en fonction de la variation d'accélération, puis la commutation a lieu en fonction du régime et de la charge.

6. Dispositif selon la revendication 4, caractérisé en ce que d'abord la sélection du mode de commutation (F1 à F8) a lieu en fonction de la variation d'accélération et de la charge, puis la commutation a lieu en fonction du régime.

7. Dispositif selon la revendication 1, caractérisé en ce que les modes de commutation (F1 à F8) sont valables aussi bien pour monter les vitesses que pour rétrograder ou ne sont valables que pour l'une de ces séquences.

8. Dispositif selon la revendication 1, caractérisé en ce que certains modes de commutation (F1 à F8) peuvent aussi être présélectionnés à la main.

9. Dispositif selon la revendication 1, caractérisé en ce qu'un mode de commutation est stocké sous la forme d'un sous-programme auxiliaire qui commande un passage de chaque vitesse à la position neutre, puis immédiatement un passage à une vitesse en fonction du régime, si la variation d'accélération est particulièrement grande et ne peut correspondre à aucun des modes de commutation définis.

10. Dispositif selon la revendication 1, caractérisé en ce que les diverses positions de marche avant du sélecteur sont associées à plusieurs vitesses de marche avant.

11. Dispositif selon la revendication 10, caractérisé en ce que le sélecteur comporte en outre une présélection pour des vitesses en marche arrière.

12. Dispositif selon la revendication 1, caractérisé en ce que la position du sélecteur influence aussi la sélection du mode de commutation.

FIG. 1

| | i | A | B | C | D | E | F | G | H | J |
|---|---|---|---|---|---|---|---|---|---|---|
| R.1 | 18,2 | | | ● | | | ● | | ● | |
| R.2 | 7,3 | | | ● | | ● | | | ● | |
| R.3 | 5,1 | | | ● | | | ● | | | ● |
| R.4 | 3,9 | | | ● | | | ● | ● | | |
| N | | | | | | | | | | |
| 1.G. | 12,9 | ● | | | | | ● | | ● | |
| 2.G. | 8,45 | ● | | | | ● | | | ● | |
| 3.G. | 6,25 | ● | | | ● | | | | ● | |
| 4.G. | 4,65 | ● | ● | | | | | | ● | |
| 5.G. | 3,58 | ● | | | | | | | | ● |
| 6.G. | 2,81 | ● | | | | | ● | ● | | |
| 7.G. | 1,84 | ● | | | | ● | | ● | | |
| 8.G. | 1,36 | ● | | | ● | | | ● | | |
| 9.G. | 1,0 | ● | ● | | | | | ● | | |
| 10.G. | 0,8 | | ● | | ● | | | ● | | |

FIG.2

1

**FIG.3**

| | i | | | |
|---|---|---|---|---|
| R.1 | 18,2 | | R | |
| R.2 | 7,3 | | | |
| R.3 | 5,1 | | | |
| R.4 | 3,9 | | | |
| N | | | N | |
| 1.G. | 12,9 | | | |
| 2.G. | 8,45 | D | 3 | 2 | 1 |
| 3.G. | 6,25 | | | |
| 4.G. | 4,65 | | | |
| 5.G. | 3,58 | | | |
| 6.G. | 2,81 | | | |
| 7.G. | 1,84 | | | |
| 8.G. | 1,36 | | | |
| 9.G. | 1,0 | | | |
| 10.G. | 0,8 | | | |

FIG.4

| | F1 | F2 | F3 | F4 |
|---|---|---|---|---|
| D | ● | ● | ● | ● |
| 3 | ● | ● | ● | ● |
| 2 | ● | ● | ● | — |
| 1 | ● | ● | — | — |

FIG.5